(19) **Europäisches Patentamt**
**European Patent Office**
**Office européen des brevets**

(11) **EP 1 927 776 B1**

(12) **EUROPÄISCHE PATENTSCHRIFT**

(45) Veröffentlichungstag und Bekanntmachung des Hinweises auf die Patenterteilung:
**17.08.2011   Patentblatt 2011/33**

(51) Int Cl.:
***F16D 48/06*** *(2006.01)*

(21) Anmeldenummer: **08002605.7**

(22) Anmeldetag: **23.03.2005**

(54) **Hydraulische Betätigungsvorrichtung für eine Kraftfahrzeug-Reibkupplung**

Hydraulic operation device for a motor vehicle friction coupling

Dispositif d'actionnement hydraulique pour l'embrayage à friction d'un véhicule automobile

(84) Benannte Vertragsstaaten:
**DE FR IT**

(30) Priorität: **24.03.2004   DE 102004015185**

(43) Veröffentlichungstag der Anmeldung:
**04.06.2008   Patentblatt 2008/23**

(62) Dokumentnummer(n) der früheren Anmeldung(en) nach Art. 76 EPÜ:
**05730297.8 / 1 728 000**

(73) Patentinhaber: **FTE automotive GmbH**
**96106 Ebern (DE)**

(72) Erfinder:
• **Porzel, Rainer**
**96106 Ebern (DE)**
• **Kadlac, Otto**
**96052 Bamberg (DE)**
• **Oberlack, Norbert**
**91315 Höchstadt (DE)**
• **Peuker, Karl**
**96106 Ebern (DE)**
• **Zsari, Geza**
**96106 Ebern (DE)**

(74) Vertreter: **Oppermann, Mark**
**Oppermann & Oppermann**
**Patentanwälte**
**Am Wiesengrund 35**
**63075 Offenbach (DE)**

(56) Entgegenhaltungen:
**EP-A- 0 324 553     GB-A- 2 231 933**

**Beschreibung**

TECHNISCHES GEBIET

Die Erfindung bezieht sich auf eine hydraulische Betätigungsvorrichtung für eine Kraftfahrzeug-Reibkupplung, wie sie massenweise in der Automobilindustrie zum Einsatz kommen.

STAND DER TECHNIK

Eine herkömmliche hydraulische Betätigungsvorrichtung für eine Kraftfahrzeug-Reibkupplung, wie sie etwa im "Handbuch der hydraulischen Bremsanlage und Kupplungsbetätigung" der Anmelderin, 1. Auflage 1998, auf Seite 261 gezeigt ist, hat einen an einen mit Hydraulikflüssigkeit gefüllten Ausgleichsbehälter angeschlossenen Geberzylinder, dessen Geberkolben über ein Betätigungsorgan in Form eines Kupplungspedals kraftbeaufschlagt und verschoben werden kann. Der Geberzylinder ist über eine Druckleitung mit einem Nehmerzylinder hydraulisch verbunden, bei dem es sich um einen "klassischen" Nehmerzylinder mit einem zylindrischen Kolben oder aber um einen sogenannten "Zentralausrücker" mit einem konzentrisch bezüglich der Getriebeeingangswelle angeordneten Ringkolben handeln kann. Wird das Kupplungspedal niedergetreten, so wird der im Geberzylinder erzeugte Druck über die Flüssigkeitssäule in der Druckleitung auf den Nehmerzylinder übertragen. Im Ergebnis wird ein Ausrückorgan der Kupplung - im Falle des klassischen Nehmerzylinders der mit dem Ausrücklager der Kupplung wirkverbundene Ausrückhebel bzw. im Falle des Zentralausrückers das Ausrücklager - über den Nehmerzylinderkolben mit einer Betätigungskraft beaufschlagt, um über einen Ausrückmechanismus die Kupplungsdruckplatte von der Kupplungsmitnehmerscheibe und somit den Motor vom Getriebe des Kraftfahrzeugs zu trennen.

In letzter Zeit zeichnet sich zunehmend ein Trend ab, Kraftfahrzeuge stärker zu motorisieren. Infolgedessen haben moderne Kraftfahrzeug-Reibkupplungen nicht selten Drehmomente von über 300 Nm zu übertragen. Um derartig stark dimensionierte Kupplungen auszurücken, sind im Verhältnis hohe Betätigungskräfte aufzubringen. Wird hierzu eine konventionelle hydraulische Betätigungsvorrichtung eingesetzt, führt dies zu einem hohen Kraftbedarf am Kupplungspedal. Derartig hohe zum Ausrücken der Kupplung benötigte Pedalkräfte sind insbesondere bei Personenkraftwagen jedoch unerwünscht.

Zwar sind im Stand der Technik auch hydraulische Betätigungsvorrichtungen für Kraftfahrzeug-Reibkupplungen bekannt geworden, bei denen der Geberkolben des Geberzylinders stets (z.B. US 4,918,921) bzw. wahlweise (z.B. US 5,002,166) über ein mittels eines Elektromotors antreibbares Getriebe kraftbeaufschlagbar und verschiebbar ist. Im Falle eines solchen Servobetriebs dieser Betätigungsvorrichtungen erfährt die Bedienperson jedoch keine für den jeweiligen Ausrückzustand der Reibkupplung repräsentative Rückmeldung am Kupplungspedal.

Ein dem vorstehend genannten Stand der Technik ähnlicher, elektromotorisch betätigbarer Geberzylinder für eine hydraulische Kupplungsbetätigungsvorrichtung ist schließlich der US 5,094,079 zu entnehmen. Die hier offenbarte Geberzylinderbaugruppe benötigt allerdings u.a. einen erheblichen Bauraum, der in modernen Kraftfahrzeugen am Pedalblock für das Kupplungspedal nicht immer verfügbar ist.

Der Erfindung liegt die Aufgabe zugrunde, eine möglichst einfach und kompakt aufgebaute hydraulische Betätigungsvorrichtung für eine Kraftfahrzeug-Reibkupplung zu schaffen, mittels der auch Kupplungen betätigt werden können, die im Verhältnis hohe Drehmomente übertragen, ohne daß hierfür im Vergleich zu der gattungsgemäßen hydraulischen Betätigungsvorrichtung größere Pedalkräfte bzw. -wege erforderlich sind.

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 6 und werden nachfolgend in der detaillierten Beschreibung der Ausführungsbeispiele noch näher beschrieben werden.

DARSTELLUNG DER ERFINDUNG

Gemäß der Erfindung umfaßt eine hydraulische Betätigungsvorrichtung für eine Kraftfahrzeug-Reibkupplung

einen Geberzylinder, dessen Geberkolben über ein Betätigungsorgan als Gebergrößen mit einer Geberkraft beaufschlagbar und um einen Geberweg verschiebbar ist,
einen Nehmerzylinder, der einen mit dem Geberkolben hydraulisch in Reihe geschalteten Nehmerkolben aufweist, welcher mit einem Ausrückorgan der Kraftfahrzeug-Reibkupplung wirkverbunden ist,
eine Stelleinheit, die einen Stellkolben hat, der über ein mittels eines Elektromotors antreibbares Getriebe kraftbeaufschlagbar und verschiebbar ist, zur hydraulischen Reihenschaltung von Geberkolben und Stellkolben zwischen dem Geberkolben und dem Nehmerkolben angeordnet ist und eine Flüssigkeitssäule zwischen dem Geberkolben und dem Nehmerkolben in einen Geberabschnitt zwischen Geberkolben und Stellkolben und einen Nehmerabschnitt zwischen Stellkolben und Nehmerkolben unterteilt,

eine Steuereinheit, mittels der der Elektromotor ansteuerbar ist, so daß durch Kraftbeaufschlagung des Stellkolbens über das Getriebe die auf den Nehmerabschnitt der Flüssigkeitssäule wirkende Kraft definiert anhebbar ist,

eine mit der Steuereinheit signalverbundene erste Sensoreinrichtung, mittels der ein Geberdruck $(p_{Gist})$ im Geberabschnitt der Flüssigkeitssäule oder die Geberkraft $(F_{Gist})$ als Regelgröße erfaßbar ist, und

eine mit der Steuereinheit signalverbundene zweite Sensoreinrichtung, mittels der ein Nehmerdruck $(p_{Nist})$ im Nehmerabschnitt der Flüssigkeitssäule als Führungsgröße erfaßbar ist,

wobei die Steuereinheit ein Rechenglied aufweist, mittels dessen ein Soll-Wert für den Geberdruck $(p_{Gsoll})$ bzw. die Geberkraft $(F_{Gsoll})$ nach folgender Beziehung ermittelbar ist:

$$p_{Gsoll} = 1/k_V \star p_{Nist} \quad \text{bzw.} \quad F_{Gsoll} = A_G/k_V \star p_{Nist}$$

mit

$P_{Nist}$: dem vermittels der zweiten Sensoreinrichtung erfaßten Nehmerdruck im Nehmerabschnitt der Flüssigkeitssäule,

$k_V$: einem in einem Speicherglied der Steuereinheit abgelegten Verstärkungsfaktor und

$A_G$: der hydraulischen Wirkfläche des Geberkolbens,

wobei die Steuereinheit ferner ein Korrekturglied aufweist, mittels dessen der Verstärkungsfaktor $(k_V)$ mit zunehmendem Kupplungsverschleiß definiert vergrößerbar ist, so daß eine Bedienperson beim Aus- bzw. Einrücken der Kupplung unabhängig vom Kupplungsverschleiß am Betätigungsorgan stets den gleichen Reaktionskraftverlauf verspürt, und

wobei der ermittelte Geberdruck $(p_{Gsoll})$ oder die ermittelte Geberkraft $(F_{Gsoll})$ über den von der Steuereinheit angesteuerten Elektromotor der Stelleinheit einregelbar ist.

Hierbei kann der Verstärkungsfaktor $(k_V)$ mittels des Korrekturglieds der Steuereinheit in Abhängigkeit vom Kupplungsverschleiß vorteilhaft nach folgender Beziehung korrigierbar sein:

$$k_V = k_{V0} \star (p_{Nmax0} + \Delta p_{Nmax}) / p_{Nmax0}$$

wobei

$$\Delta p_{Nmax} = p_{Nmaxist} - p_{Nmax0}$$

mit

$k_{v0}$: einem in dem Speicherglied der Steuereinheit abgelegten, festen Verstärkungsfaktor für eine unverschlissene Kupplung,

$P_{Nmax0}$: einem in dem Speicherglied der Steuereinheit abgelegten Festwert für einen maximalen Nehmerdruck im Nehmerabschnitt der Flüssigkeitssäule bei unverschlissener Kupplung und

$p_{Nmaxist}$: dem vermittels der zweiten Sensoreinrichtung erfaßten maximalen Nehmerdruck im Nehmerabschnitt der Flüssigkeitssäule.

Auch kann vorgesehen sein, daß der Geberkolben mittels einer Rückstellfeder in eine Grundstellung vorgespannt ist, in der der Druckraum des Geberzylinders mit einem Vorratsbehälter hydraulisch verbunden ist. Ebenso kann der Stellkolben mittels einer Vorspannfeder in eine Grundstellung vorgespannt sein, in der ein Druckraum der Stelleinheit mit einem Vorratsbehälter hydraulisch verbunden ist.

Bei dem Getriebe der Stelleinheit kann es sich um einen Spindeltrieb handeln; bei dem Elektromotor der Stelleinheit handelt es sich bevorzugt um einen bürstenlosen Gleichstrommotor.

Bei der Reihenschaltung von Geberkolben und Stellkolben ermöglicht die Stelleinheit also eine definierte Erhöhung der auf die Flüssigkeitssäule zwischen Geberkolben und Nehmerkolben über das Betätigungsorgan, z.B. ein Kupplungspedal, aufgebrachten Kraft, woraus eine Erhöhung des Druckniveaus in der am Nehmerkolben anstehenden Flüssigkeitssäule resultiert. Mit anderen Worten gesagt setzt sich die über den Nehmerkolben an der Kupplung aufgebrachte Ausrückkraft aus zwei Kraftanteilen zusammen, nämlich einem ersten Kraftanteil, der über das Betätigungsorgan von der Bedienperson aufgebracht wird, und einem zweiten Kraftanteil, der durch die Stelleinheit beigesteuert wird. Im Ergebnis ist es möglich, durch die resultierende Erhöhung des Druckniveaus in der am Nehmerkolben anstehenden Flüssigkeitssäule unter Beibehaltung eines herkömmlichen Nehmerzylinders Kupplungen zu betätigen, die im Verhältnis hohe Drehmomente zu übertragen haben und demgemäß hohe Ausrückkräfte erfordern, ohne daß dies - verglichen mit herkömmlichen Betätigungsvorrichtungen - eine Veränderung der hierfür von der Bedienperson am Kupplungspedal aufzubringenden Kräfte bedingen würde.

Bei der Reihenschaltung von Geberkolben und Stellkolben unterteilt der Stellkolben die Flüssigkeitssäule zwischen dem Geberkolben und dem Nehmerkolben in einen Geberabschnitt zwischen Geberkolben und Stellkolben und einen Nehmerabschnitt zwischen Stellkolben und Nehmerkolben. Es findet also eine Kreistrennung durch einen Kolben statt, was Druckräume zu beiden Seiten des Kolbens erfordert. Ist der Stellkolben zwischen Geberkolben und Nehmerkolben angeordnet, so kann vorteilhaft ein herkömmlicher, kompakter Geberzylinder zum Einsatz kommen, so daß sich diese Schaltung auch hervorragend für eine sogenannte "add on"-Lösung eignet, bei der z.B. eine am Markt befindliche, gattungsgemäße Betätigungsvorrichtung erfindungsgemäß um eine Stelleinheit und eine Steuereinheit ergänzt wird und demgemäß zur Betätigung einer Kupplung, die im Verhältnis hohe Drehmomente zu übertragen hat, umgerüstet werden kann. Auch sind so Baukastensysteme denkbar, mit einem Satz von Nehmerzylindern, einem Satz von Geberzylindern und einer Stelleinheit mit entsprechender Steuereinheit, wobei jeweils ein Nehmerzylinder mit einem der Geberzylinder und darüber hinaus optional mit der Baugruppe Stelleinheit/Steuereinheit kombiniert werden kann, so daß hier eine ganze Bandbreite von verschiedenen Kupplungen mit unterschiedlichem Drehmomentübertragungsvermögen von der Betätigungsseite her abgedeckt werden kann.

Bei der erfindungsgemäßen Schaltung kann die räumliche Lage der Stelleinheit in vorteilhafter Weise unabhängig von der Lage sowohl des Geberzylinders als auch des Nehmerzylinders gewählt werden kann, wodurch eine große Flexibilität hinsichtlich der Möglichkeiten der Anordnung der Stelleinheit gegeben ist. Dies ist insbesondere bei modernen Personenkraftwagen von Vorteil, welche in der Regel eine Vielzahl von Aggregaten aufweisen, die im Motorraum unterzubringen sind.

Da des weiteren der Elektromotor der Stelleinheit zur Kraftbeaufschlagung bzw. Verschiebung des Stellkolbens über das Getriebe vermittels der Steuereinheit in Abhängigkeit von einer der Gebergrößen, sprich der Geberkraft oder einer dazu im wesentlichen proportionalen Größe ansteuerbar ist, kann stets gewährleistet werden, daß die Stelleinheit bei der Kupplungsbetätigung gerade eine solche Kraft beisteuert, die bewirkt, daß sich die entsprechende Gebergröße für die Bedienperson vom Pedalgefühl her nicht von der entsprechenden Gebergröße bei der Betätigung einer herkömmlichen hydraulischen Betätigungsvorrichtung unterscheidet, obwohl eine Kupplung ausgerückt wird, die höhere Drehmomente überträgt und dementsprechend höhere Ausrückkräfte erfordert.

Nicht zuletzt ergeben sich Vorteile daraus, daß erfindungsgemäß ein direkter mechanischer Angriff eines Stellmotors am Geberkolben, wie er z.B. aus der eingangs zitierten US 5,094,079 bekannt ist, gerade vermieden wird. Zum einen kann somit bei der erfindungsgemäßen Betätigungsvorrichtung nämlich ein Geberzylinder eingesetzt werden, der keinen übermäßig großen Bauraum am Pedalbock für das Kupplungspedal beansprucht. Zum anderen sorgt die hydraulische Verbindung zwischen Stelleinheit und Geberzylinder für ein - verglichen mit dem obigen Stand der Technik - weniger steifes System bzw. eine bestimmte "Weichheit" im System, aufgrund der es zu einer gewissen Verzögerung des Druckaufbaus kommen und die ggf. im Hinblick auf eine Schwingungsoptimierung des hydraulischen Betätigungssystems genutzt werden kann.

KURZE BESCHREIBUNG DER ZEICHNUNGEN

Im folgenden wird die Erfindung anhand bevorzugter Ausführungsbeispiele unter Bezugnahme auf die beigefügten schematischen Zeichnungen näher erläutert, wobei gleiche oder entsprechende Teile mit den gleichen Bezugszeichen versehen sind. In den Zeichnungen zeigen:

Fig. 1    ein Schaltbild einer hydraulischen Betätigungsvorrichtung für eine Kraftfahrzeug-Reibkupplung nach einem ersten Ausführungsbeispiel, nicht gemäß der Erfindung, bei dem ein Geberkolben eines Geberzylinders mit einem Stellkolben einer elektromechanischen Stelleinheit bezüglich eines Nehmerkolbens eines Nehmerzylinders hydraulisch parallel geschaltet ist,

Fig. 2    ein zur Erläuterung des ersten Ausführungsbeispiels dienendes erstes Diagramm, in dem der Stellweg $S_S$ des Stellkolbens in der Stelleinheit als Funktion des Geberwegs $S_G$ des Geberkolbens im Geberzylinder aufgetragen ist,

Fig. 3    ein zur Erläuterung des ersten Ausführungsbeispiels dienendes zweites Diagramm, in dem die Volumenaufnahme $\Delta V_N$ des Nehmerzylinders als Funktion des Stellwegs $s_s$ des Stellkolbens in der Stelleinheit bzw. des Geberwegs $S_G$ des Geberkolbens aufgetragen ist,

Fig. 4    ein zur Erläuterung des ersten Ausführungsbeispiels dienendes drittes Diagramm, in dem der im Nehmerzylinder herrschende Nehmerdruck $p_N$ als Funktion der Volumenaufnahme $\Delta V_N$ des Nehmerzylinders aufgetragen ist,

Fig. 5    ein Schaltbild einer erfindungsgemäßen hydraulischen Betätigungsvorrichtung für eine Kraftfahrzeug-Reibkupplung nach einem zweiten Ausführungsbeispiel, bei dem der Geberkolben des Geberzylinders mit dem Stellkolben der elektromechanischen Stelleinheit und dem Nehmerkolben des Nehmerzylinders hydraulisch in Reihe geschaltet ist, wobei sich der Stellkolben zwischen dem Geberkolben und dem Nehmerkolben befindet, und

Fig. 6    ein zur Erläuterung des zweiten Ausführungsbeispiels dienendes Diagramm, in dem der im Geberzylinder herrschende Geberdruck $p_G$ und der im Nehmerzylinder herrschende Nehmerdruck $p_N$ als Funktion des Geberwegs $S_G$ des Geberkolbens im Geberzylinder aufgetragen sind.

DETAILLIERTE BESCHREIBUNG DER AUSFÜHRUNGSBEISPIELE

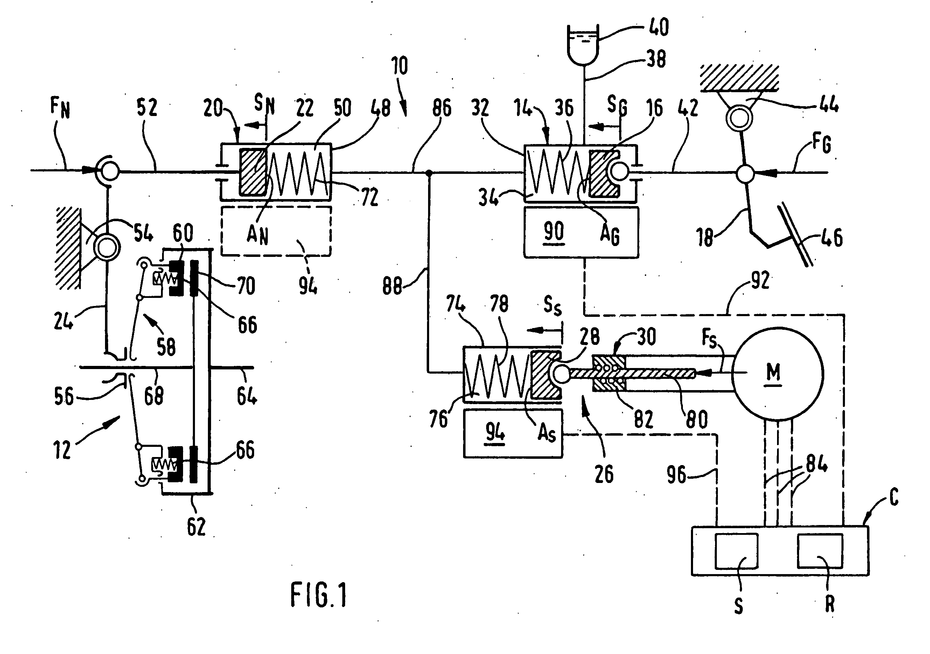

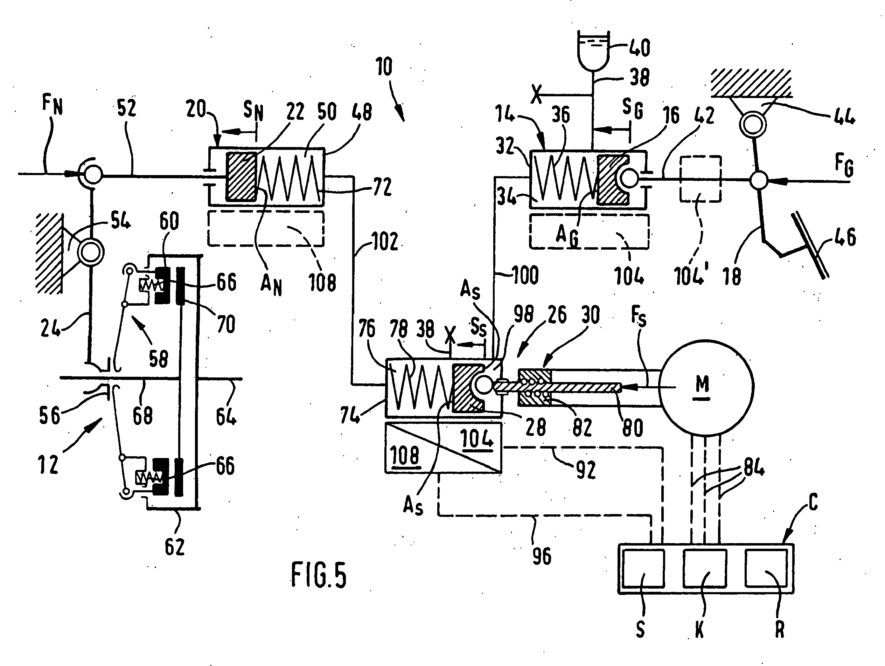

Die Fig. 1 und 5 zeigen jeweils eine hydraulische Betätigungsvorrichtung 10 für eine Kraftfahrzeug-Trockenreibkupplung - nachfolgend kurz Kupplung 12 genannt - in ihrer Grundstellung, d.h. dem unbetätigten Zustand, in dem die Kupplung 12 eingerückt ist. Diese Betätigungsvorrichtungen 10 umfassen jeweils in an sich bekannter Weise einen Geberzylinder 14 mit einem Geberkolben 16, der über ein Betätigungsorgan - in den dargestellten Ausführungsbeispielen ein Kupplungspedal 18 - als Gebergrößen mit einer Geberkraft $F_G$ beaufschlagt und um einen Geberweg $S_G$ verschoben werden kann, und einen Nehmerzylinder 20, der einen mit dem Geberkolben 16 über eine Flüssigkeitssäule hydraulisch in Reihe geschalteten Nehmerkolben 22 aufweist, welcher mit einem Ausrückorgan - in den dargestellten Ausführungsbeispielen ein Ausrückhebel 24 - der Kupplung 12 wirkverbunden ist. Den Betätigungsvorrichtungen 10 gemäß den Fig. 1 und 5 ist des weiteren gemein, daß sie jeweils eine elektromechanische Stelleinheit 26 mit einem Stellkolben 28 aufweisen, der über ein mittels eines Elektromotors M antreibbares Getriebe 30 mit einer Stellkraft $F_s$ beaufschlagt und um einen Stellweg $S_S$ verschoben werden kann. Während bei dem ersten Ausführungsbeispiel gemäß Fig. 1 der Stellkolben 28 bezüglich des Nehmerkolbens 22 hydraulisch parallel zum Geberkolben 16 geschaltet ist, ist bei dem zweiten Ausführungsbeispiel gemäß Fig. 5 der Stellkolben 28 mit dem Geberkolben 16 und dem Nehmerkolben 22 hydraulisch in Reihe geschaltet. Schließlich haben beide Betätigungsvorrichtungen 10 eine Steuereinheit C, mittels der der Elektromotor M der Stelleinheit 26 in Abhängigkeit von einer der Gebergrößen $F_G$, $S_G$ oder einer dazu im wesentlichen proportionalen Größe derart ansteuerbar ist, daß, wie nachfolgend noch ausführlich erläutert werden wird, im Falle der Reihenschaltung von Geberkolben 16 und Stellkolben 28 (Fig. 5) durch Kraftbeaufschlagung des Stellkolbens 28 über das Getriebe 30 die auf die Flüssigkeitssäule zwischen Geberkolben 16 und Nehmerkolben 22 wirkende Kraft definiert erhöht werden kann, während im Falle der Parallelschaltung von Geberkolben 16 und Stellkolben 28 (Fig. 1) durch Verschiebung des Stellkolbens 28 über das Getriebe 30 das Volumen der Flüssigkeitssäule zwischen Geberkolben 16 und Nehmerkolben 22 definiert vergrößert werden kann.

Der Geberzylinder 14 weist in an sich bekannter Weise ein Zylindergehäuse 32 auf, in dem der Geberkolben 16 längsverschieblich und gegenüber der Innenumfangsfläche des Zylindergehäuses 32 mittels hier nicht dargestellter Dichtmittel abgedichtet geführt ist, wobei der Geberkolben 16 im Zylindergehäuse 32 einen Druckraum 34 druckdicht und variabel begrenzt. Im Druckraum 34 ist eine Rückstellfeder 36 - in den dargestellten Ausführungsbeispielen in der Form einer Schraubendruckfeder - angeordnet, mittels der der Geberkolben 16 in seine in den Fig. 1 und 5 dargestellte Grundstellung vorgespannt ist, in der der Druckraum 34 über eine Nachlaufleitung 38 mit einem Vorratsbehälter 40 für die Hydraulikflüssigkeit hydraulisch verbunden ist, so daß in der Grundstellung des Geberkolbens 16 u.a. etwaige Verluste an Hydraulikflüssigkeit im hydraulischen System ausgeglichen werden und auch eine Entlüftung desselben über den Vorratsbehälter 40 erfolgen kann.

Auf der vom Druckraum 34 abgewandten Seite des Geberkolbens 16 ist eine Kolbenstange 42 vorgesehen, die mit ihrem einen Ende am Geberkolben 16 angreift und mit ihrem anderen Ende am Kupplungspedal 18 angelenkt ist. Das Kupplungspedal 18 selbst ist in an sich bekannter Weise mit seinem einen Ende an einem in den Fig. 1 und 5 lediglich schematisch angedeuteten Pedalbock 44 des Kraftfahrzeugs verschwenkbar gelagert und weist an seinem anderen Ende eine Druckplatte 46 auf, über die die Bedienperson Betätigungskräfte am Kupplungspedal 18 aufbringen kann. Es ist ersichtlich, daß die Bedienperson durch Aufbringung von Betätigungskräften an der Druckplatte 46 des Kupplungspedals 18 - üblicherweise das Niedertreten des Kupplungspedals 18 - mit einer durch die Geometrie und die Abmessungen des Kupplungspedals 18 sowie die räumliche Lage der Gelenkpunkte zwischen Kupplungspedal 18 und Pedalbock 44 bzw. Kolbenstange 42 definierten Hebelübersetzung über die Kolbenstange 42 eine bestimmte Geberkraft $F_G$ am Geberkolben 16 erzeugen und diesen um einen bestimmten Geberweg $S_G$ verschieben kann.

Bei dem Nehmerzylinder 20 handelt es sich in den dargestellten Ausführungsbeispielen um eine "klassische" Kolben-Zylinder-Anordnung - im Gegensatz zu einem sogenannten "Zentralausrücker", wie er z.B. in der DE 102 22 730 A1 der Anmelderin beschrieben wird, und der hier alternativ zum Einsatz kommen könnte - mit einem Zylindergehäuse 48, in dem der Nehmerkolben 22 längsverschieblich und gegenüber der Innenumfangsfläche des Zylindergehäuses 48 mittels hier nicht gezeigter Dichtmittel abgedichtet geführt ist, um im Zylindergehäuse 48 einen Druckraum 50 druckdicht und variabel zu begrenzen. Auf der vom Druckraum 50 abgewandten Seite des Nehmerkolbens 22 ist eine Druckstange 52 am Nehmerkolben 22 befestigt, die mit ihrem vom Nehmerkolben 22 abgewandten Ende an dem in den Fig. 1 und 5 oberen Ende des Ausrückhebels 24 angreift.

Der Ausrückhebel 24 selbst ist in an sich bekannter Weise verschwenkbar an einem in den Fig. 1 und 5 lediglich schematisch angedeuteten Umlenkbock 54 gelagert und greift mit seinem in diesen Figuren unteren Ende an einem ebenfalls nur schematisch gezeichneten Ausrücklager 56 der Kupplung 12 an. Das Ausrücklager 56 ist über einen ebenfalls an sich bekannten Ausrückmechanismus 58 mit einer axial beweglichen Druckplatte 60 wirkverbunden, die zusammen mit dem Ausrückmechanismus 58 an einem Schwungrad 62 befestigt ist, welches seinerseits drehfest an einer Kurbelwelle 64 einer Verbrennungskraftmaschine (nicht dargestellt) angebracht ist. Der Ausrückmechanismus 58 weist des weiteren Anpreßfedern 66 - die eigentlichen Kupplungsfedern - auf, die im Ruhezustand der Kupplung 12 die Druckplatte 60 gegen eine in an sich bekannter Weise Reibbeläge tragende und drehfest an einer Getriebeeingangswelle 68 angebrachte Mitnehmer- oder Kupplungsscheibe 70 pressen und somit letztere gegen das Schwungrad 62 drücken, so daß im eingerückten Zustand der Kupplung 12 ein Reibschluß zwischen Schwungrad 62, Kupplungsscheibe 70 und Druckplatte 60 besteht, der für eine Drehmomentübertragung von der Kurbelwelle 64 auf die Getriebeeingangswelle 68 sorgt.

Der Nehmerzylinder 20 hat ferner eine im Druckraum 50 angeordnete Vorlastfeder 72 - in den dargestellten Ausführungsbeispielen wiederum in der Form einer Schraubendruckfeder - mittels der der Nehmerkolben 22 in seine in den Fig. 1 und 5 etwas übertrieben weit links dargestellte Ruhestellung vorgespannt ist. Im Ergebnis sorgt die Vorlastfeder 72, deren Federkraft so gewählt ist, daß sie die Federkraft der Anpreßfedern 66 nicht zu überwinden vermag, über die Druckstange 52 und den Ausrückhebel 24 für eine dauernde leichte Anlage des Ausrücklagers 56 an den weiteren Ausrückelementen der Kupplung 12, so daß zwischen diesen Bauteilen kein Spiel vorhanden ist. Auch bewirkt die Vorlastfeder 72 somit ein ständiges Mitlaufen des Ausrücklagers 56 mit den sich drehenden Bauteilen der Kupplung 12, was den Verschleiß des Ausrücklagers 56 gegenüber einer Konstruktion, bei der das Ausrücklager beim Aus- bzw. Einrückvorgang der Kupplung beschleunigt bzw. abgebremst werden würde, stark vermindert.

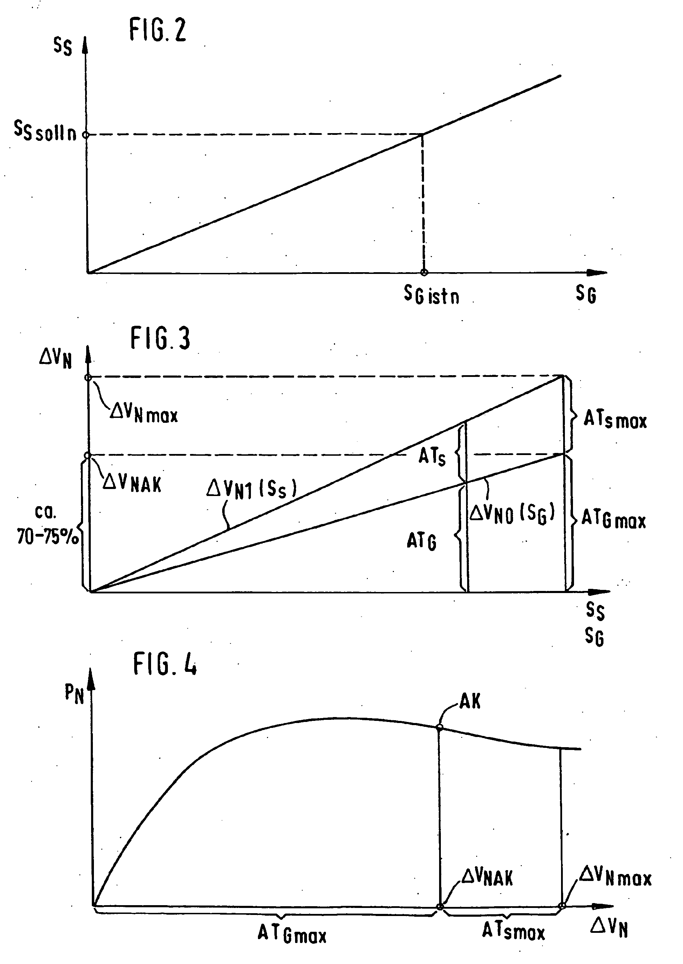

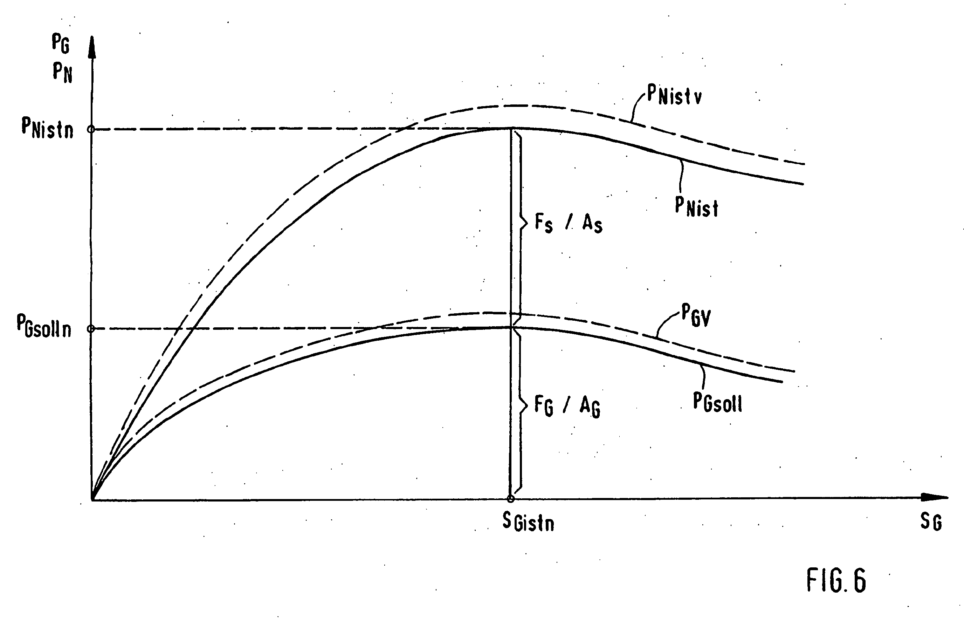

Es ist ersichtlich, daß infolge der einander entgegengerichteten Federkräfte der Vorlastfeder 72 und der Anpreßfedern 66 sowie der Hebelübersetzungen über den Ausrückhebel 24 und den Ausrückmechanismus 58 eine bestimmte, sich über den Hub bzw. Nehmerweg $S_N$ des Nehmerkolbens 22 ändernde Widerstandskraft, hier Nehmerkraft $F_N$ genannt, vorliegt, die es durch Druckbeaufschlagung des Druckraums 50 mit einem Nehmerdruck $p_N$ zu überwinden gilt, um den Nehmerkolben 22 in den Fig. 1 und 5 nach links zu bewegen und somit die Kupplung 12 auszurücken, d.h. die Druckplatte 60 von der Kupplungsscheibe 70 und somit die Verbrennungskraftmaschine vom Getriebe (beides nicht gezeigt) zu trennen. Den Fig. 4 und 6 sind solche typische, der jeweiligen Kupplung 12 immanente Verläufe des Nehmerdrucks $p_N$ bzw. der Nehmerkraft $F_N$ - auch Kupplungskennlinien genannt - aufgetragen über der Volumenaufnahme $\Delta V_N$ des Nehmerzylinders 20 (Fig. 4) und dem Hub bzw. Geberweg $S_G$ des Geberkolbens 16 (Fig. 6) für die verschiedenen Ausführungsbeispiele der hydraulischen Betätigungsvorrichtung 10 zu entnehmen.

Auch die Stelleinheit 26 hat ein Zylindergehäuse 74, in dem der Stellkolben 28 längsverschieblich und gegenüber der Innenumfangsfläche des Zylindergehäuses 74 mittels geeigneter, hier nicht dargestellter Dichtmittel abgedichtet geführt ist, so daß der Stellkolben 28 in beiden Ausführungsbeispielen auf seiner in den Fig. 1 und 5 linken Seite einen Druckraum 76 druckdicht und variabel begrenzt. In dem Druckraum 76 der Stelleinheit 26 ist eine Vorspannfeder 78 - in den dargestellten Ausführungsbeispielen erneut in der Form einer Schraubendruckfeder - angeordnet, die den Stellkolben 28 in den Fig. 1 und 5 nach rechts vorspannt.

Auf der in den Fig. 1 und 5 rechten Seite des Stellkolbens 28 ist das Getriebe 30 auf nicht näher gezeigte Weise am oder im Zylindergehäuse 74 befestigt. Bei dem Getriebe 30 handelt es sich in den dargestellten Ausführungsbeispielen um einen Spindeltrieb, genauer einen handelsüblichen, leichtgängigen Kugelgewindetrieb, mit einer Kugelrollspindel 80, der eine Spindelmutter 82 zugeordnet ist bzw. die in letzterer läuft. Während die Kugelrollspindel 80 auf in den Fig. 1 und 5 nicht näher dargestellte Weise gegen ein Verdrehen gegenüber dem Zylindergehäuse 74 gesichert ist, kann die Spindelmutter 82 mittels des Elektromotors M drehend angetrieben werden. Bei dem Elektromotor M der Stelleinheit 26 handelt es sich bevorzugt um einen bürstenlosen Gleichstrommotor, der sich durch eine hervorragende Dynamik, einen hohen Wirkungsgrad bzw. eine hohe Leistungsdichte, einen geringen Verschleiß und damit eine lange Lebensdauer, eine gute Überlastfähigkeit, ein geringes Gewicht und nicht zuletzt eine geringe Geräuschentwicklung auszeichnet. Zu der Stelleinheit 26 ist schließlich strukturell noch anzumerken, daß die Vorspannfeder 78 im Druckraum 76 bestrebt ist, den Stellkolben 28 in Anlage an dem in den Fig. 1 und 5 linken Ende der Kugelrollspindel 80 zu halten, welches nicht fest mit dem Stellkolben 28 verbunden ist.

Vermittels der Steuereinheit C kann über Stromleitungen 84 ein elektrischer Strom von vorbestimmter Stromstärke I und Spannung U an den Elektromotor M angelegt werden, was bewirkt, daß dieser die Spindelmutter 82 um einen definierten Drehwinkel in einer definierten Drehrichtung mit einem definierten Drehmoment verdreht. Die Drehbewegung der Spindelmutter 82 wird dabei in Abhängigkeit von der Spindelsteigung in eine translatorische Bewegung der Kugelrollspindel 80 transformiert, so daß das Getriebe 30 entsprechend der Drehwinkelstellung der Spindelmutter 82 über die Kugelrollspindel 80 einen Stellweg $S_S$ am Stellkolben 28 erzeugen kann. Außerdem wird das an der Spindelmutter 82 über den Elektromotor M aufgebrachte Drehmoment in Abhängigkeit von der Spindelsteigung in eine an der Kugelrollspindel 80 angreifende Stellkraft $F_S$ umgeformt, die bei Anlage des Stellkolbens 28 an der Kugelrollspindel 80 auch auf den Stellkolben 28 wirkt und einen hydraulischen Druck in dem Druckraum 76 der Stelleinheit 26 generieren kann.

Bei dem ersten Ausführungsbeispiel der hydraulischen Betätigungsvorrichtung 10 sind der Geberzylinder 14, der Nehmerzylinder 20 und die Stelleinheit 26 gemäß Fig. 1 wie folgt miteinander verschaltet. Zunächst ist der Geberzylinder 14 mit dem Nehmerzylinder 20, genauer der Druckraum 34 des Geberzylinders 14 mit dem Druckraum 50 des Nehmerzylinders 20 mittels einer ersten Druckleitung 86 hydraulisch verbunden, in der die Flüssigkeitssäule zwischen dem Geberkolben 16 und dem Nehmerkolben 22 verschiebbar ist. Sodann ist die Stelleinheit 26, genauer deren Druckraum 76 zur Parallelschaltung von Geberkolben 16 und Stellkolben 28 über eine zweite Druckleitung 88 hydraulisch an die erste Druckleitung 86 angeschlossen. Im Ergebnis kann durch Verschiebung des Stellkolbens 28 über das mittels des Elektromotors M antreibbare Getriebe 30 das Volumen der Flüssigkeitssäule zwischen dem Geberkolben 16 und dem Nehmerkolben 22 definiert vergrößert werden. Infolgedessen ist es möglich, unter Beibehaltung eines herkömmlich dimensionierten Geberzylinders 14 den Nehmerzylinder 20 so zu vergrößern, daß der Nehmerkolben 22 eine größere hydraulische Wirkfläche aufweist, so daß im wesentlichen unter Beibehaltung des üblichen Druckniveaus in den Druckräumen 34, 50 des Geberzylinders 14 bzw. des Nehmerzylinders 20 und der Druckleitung 86 über die vergrößerte hydraulische Wirkfläche des Nehmerkolbens 22 eine größere Nehmerkraft $F_N$ aufgebracht werden kann, die es gestattet, Kupplungen 12 auszurücken, deren Anpreßfedern 66 zur Übertragung höherer Drehmomente durch die Kupplung 12 stärker als herkömmlich dimensioniert sind.

Wie des weiteren der Fig. 1 entnommen werden kann, ist am Geberzylinder 14 eine erste Sensoreinrichtung 90 vorgesehen, die über eine Signalleitung 92 an die Steuereinheit C angeschlossen, d.h. mit dieser signalverbunden ist. Ferner ist an der Stelleinheit 26 eine zweite Sensoreinrichtung 94 angeordnet, die ebenfalls über eine Signalleitung 96 mit der Steuereinheit C signalverbunden ist. Die erste Sensoreinrichtung 90 dient im ersten Ausführungsbeispiel der Erfassung des Geberwegs $S_{Gist}$ als Führungsgröße für die Regelung des Elektromotors M über die Steuereinheit C und kann beispielsweise wie in der DE 203 15 735 U1 der Anmelderin beschrieben ausgebildet sein. Mittels der zweiten Sensoreinrichtung 94 ist der Stellweg $S_{Sist}$ des Stellkolbens 28 der Stelleinheit 26 als Regelgröße erfaßbar. Auch die zweite Sensoreinrichtung 94 kann prinzipiell wie in der DE 203 15 735 U1 der Anmelderin beschrieben ausgebildet sein. Wie in der Fig. 1 mit gestrichelten Linien am Nehmerzylinder 20 angedeutet, kann die zweite Sensoreinrichtung 94 alternativ auch der Erfassung des Nehmerwegs $S_N$ des Nehmerkolbens 22 im Nehmerzylinder 20 dienen. Bevorzugt ist jedoch die Anordnung der zweiten Sensoreinrichtung 94 an der Stelleinheit 26, weil diese somit als "add on"-Baugruppe schon (wenigstens) einen Teil der für die Regelung erforderlichen Sensorik mitbringen kann.

Wie nachfolgend anhand der Fig. 2 bis 4 noch näher erläutert werden soll, ist nun in der Steuereinheit C in Abhängigkeit von dem erfaßten Geberweg $S_{Gist}$ des Geberkolbens 16 ein Soll-Wert für den Stellweg $S_{Ssoll}$ des Stellkolbens 28 (bzw. den Nehmerweg $S_{Nsoll}$ des Nehmerkolbens 22) ermittelbar, worauf der ermittelte Stellweg $S_{Ssoll}$ des Stellkolbens 28 (bzw. Nehmerweg $S_{Nsoll}$ des Nehmerkolbens 22) über den von der Steuereinheit C wie oben beschrieben angesteuerten Elektromotor M der Stelleinheit 26 einregelbar ist.

Hierfür weist die Steuereinheit C ein Rechenglied R auf, mittels dessen der Soll-Wert für den Stellweg $S_{Ssoll}$ des Stellkolbens 28 (bzw. den Nehmerweg $S_{Nsoll}$ des Nehmerkolbens 22) nach folgender Beziehung ermittelbar ist:

$$S_{Ssoll} = k_U * S_{Gist} \text{ (bzw. } S_{Nsoll} = k_U * S_{Gist})$$

mit

$S_{Gist}$: dem vermittels der ersten Sensoreinrichtung 90 erfaßten Geberweg des Geberkolbens 16 und
$k_U$: einem in einem Speicherglied S der Steuereinheit C abgelegten Übersetzungsfaktor.

Ist der Übersetzungsfaktor $k_U$ konstant, was im Hinblick auf eine geringe Komplexität der Steuereinheit C bzw. der damit bewirkten Regelung von Vorteil ist, ergibt sich der Verlauf des Stellwegs $s_s$ aufgetragen über dem Geberweg $S_G$ gemäß Fig. 2 als Gerade. Über die Steuereinheit C wird, wie die Fig. 2 veranschaulicht, also einem bestimmten, mittels der ersten Sensoreinrichtung 90 erfaßten Geberweg $S_{Gistn}$ ein bestimmter Stellweg $S_{Ssolln}$ zugeordnet, den es durch geeignete Ansteuerung des Elektromotors M der Stelleinheit 26 einzuregeln gilt, so daß der mittels der zweiten Sensoreinrichtung 94 erfaßte Ist-Wert für den Stellweg $S_{Sist}$ mit dem jeweils vorgegebenen Soll-Wert für den Stellweg $S_{Ssoll}$ übereinstimmt. Mit anderen Worten gesagt folgt der Stellkolben 28 der Stelleinheit 26 dem durch die Bedienperson vorgegebenen Hub bzw. Geberweg $S_G$ des Geberkolbens 16 in einer proportionalen Beziehung.

Mit zunehmendem Geberweg $S_G$ des Geberkolbens 16 wird also mehr Volumen an Hydraulikflüssigkeit durch die Stelleinheit 26 in die Flüssigkeitssäule zwischen Geberkolben 16 und Nehmerkolben 22 "eingeschoben". Dies veranschaulicht die Fig. 3, in der die Volumenaufnahme $\Delta V_N$ des Nehmerzylinders 20, also das ausgehend von der Ruhestellung des Nehmerzylinders 20 über dessen Druckanschluß in den Druckraum 50 des Nehmerzylinders 20 einströmende Volumen an Hydraulikflüssigkeit über dem Stellweg $S_s$ des Stellkolbens 28 bzw. dem Geberweg $S_G$ des Geberkolbens 16 aufgetragen ist. Die obere Linie $\Delta V_{N1}$ steht hierbei für die Volumenaufnahme $\Delta V_N$ des Nehmerzylinders 20, die sich bei einer Kupplungsbetätigung infolge der Volumenverdrängung aus den Druckräumen 34, 76 des Geberzylinders 14 und der Stelleinheit 26 ergibt, während die unter Linie $\Delta V_{N0}$ für die Volumenaufnahme $\Delta V_N$ des Nehmerzylinders 20 steht, die sich bei einer Kupplungsbetätigung alleine infolge der Volumenverdrängung aus dem Druckraum 34 des Geberzylinders 14 ergeben würde, wenn es z.B. zu einem Ausfall der Stelleinheit 26 käme. Es ist ersichtlich, daß sich die Volumenaufnahme $\Delta V_N$ des Nehmerzylinders 20 bei einer normalen Kupplungsbetätigung mittels der hydraulischen Betätigungsvorrichtung 10 quasi aus zwei Anteilen $AT_G$, $AT_S$ zusammensetzt, nämlich einem Anteil $AT_G$ infolge der Volumenverdrängung aus dem Druckraum 34 des Geberzylinders 14 und einem Anteil $AT_S$ infolge der parallelen Volumenverdrängung aus dem Druckraum 76 der Stelleinheit 26, wobei das Verhältnis der Anteile $AT_G : AT_S$ bei der Kupplungsbetätigung im wesentlichen konstant bleibt.

Durch Einschieben eines Volumens an Hydraulikflüssigkeit in den Druckraum 50 des Nehmerzylinders 20 wird der Nehmerkolben 22 in Fig. 1 nach links verschoben, so daß die Kupplung 12 über die Druckstange 52 und den Ausrückhebel 24 in an sich bekannter Weise ausgerückt wird. Die hierfür benötigte Nehmerkraft $F_N$ und damit der erforderliche, im Druckraum 50 des Nehmerzylinders 20 aufzubringende Nehmerdruck $p_N$ ändert sich, wie weiter oben bereits angesprochen, in Abhängigkeit von der Auslegung der jeweiligen Kupplung 12 mit dem Nehmerweg $S_N$ des Nehmerkolbens 22, der sich proportional zur Volumenaufnahme $\Delta V_N$ des Nehmerzylinders 20 verhält. Diese Kupplungskennlinie $(p_N = f(\Delta V_N))$ ist in Fig. 4 gezeigt.

Um ein "fail-safe"-Verhalten der hydraulischen Betätigungsvorrichtung 10 zu gewährleisten, d.h. sicherzustellen, daß die Kupplung 12 auch dann (gerade) noch ausgerückt werden kann, wenn die Stelleinheit 26 z.B. aufgrund eines Versagens der Elektrik ausgefallen ist, ist die hydraulische Betätigungsvorrichtung 10 im Hinblick auf das Verhältnis der Volumenanteile $AT_G : AT_S$, die durch den Geberzylinder 14 bzw. die Stelleinheit 26 aufgebracht werden, vorzugsweise so ausgelegt, daß das mittels der Stelleinheit 26 maximal beisteuerbare Volumen $AT_{Smax}$ an Hydraulikflüssigkeit limitiert ist oder, mit anderen Worten gesagt, daß das aus dem Druckraum 34 des Geberzylinders 14 mittels des Geberkolbens 16 maximal verdrängbare Volumen $AT_{Gmax}$ (gerade) dazu ausreicht, einen solchen Hub bzw. Nehmerweg $S_N$ des Nehmerkolbens 22 zu bewirken, daß die Kupplung 12 bis zu ihrem sogenannten Auskuppelpunkt AK (siehe Fig. 4) oder bis wenigstens kurz davor ausgerückt wird. Kurz vor dem Auskuppelpunkt AK wird nur noch ein Bruchteil des maximal übertragbaren Drehmoments von der Kupplung 12 übertragen, so daß hier im Getriebe (nicht gezeigt) ein Gangwechsel schon möglich ist, wenn auch nur unter Ausübung einer gewissen Gewalt. Üblicherweise liegt der Auskuppelpunkt AK bei etwa 70 bis 75 % der maximalen Volumenaufnahme $\Delta V_{Nmax}$ des Nehmerzylinders 20, wie die Fig. 3 und 4 zeigen, so daß das Verhältnis der Volumenanteile $AT_G : AT_S$ vorzugsweise im Bereich von 70 : 30 bis 75 : 25 liegen sollte.

Bliebe zum ersten Ausführungsbeispiel noch anzumerken, daß bei einem Verschleiß der Kupplung 12 ein Eingriff in die Ansteuerung der Stelleinheit 26 mittels der Steuereinheit C nicht notwendig ist. Bei einem Verschleiß der Kupplung 12 nimmt die Dicke der Reibbeläge an der Kupplungsscheibe 70 ab. Infolgedessen schieben die Anpreßfedern 66 das Ausrücklager 56 über den Ausrückmechanismus 58 nach links in Fig. 1. Dies führt dazu, daß der über den Ausrückhebel 24 und die Druckstange 52 gedrückte Nehmerkolben 22 in seiner Ruhestellung in Fig. 1 nach rechts wandert. Insofern nimmt das Gesamtruhevolumen der Flüssigkeitssäule zwischen Geberkolben 16 und Nehmerkolben 22 ab, wobei überschüssige Hydraulikflüssigkeit in der Grundstellung des Geberkolbens 16 über die Nachlaufleitung 38 in den Vorratsbehälter 40 gedrückt wird. Es ändert sich also lediglich das Gesamtruhevolumen der Flüssigkeitssäule, d.h. ein absoluter Volumenbetrag, was weder die Volumenverdrängung aus den Druckräumen 34, 76 des Geberzylinders 14 bzw. der Stelleinheit 26 noch die Volumenaufnahme durch den Druckraum 50 des Nehmerzylinders 20, d.h. die relativen Volumenänderungen bei einer Kupplungsbetätigung berührt. Allerdings steigt wie bei herkömmlichen hydraulischen Betätigungsvorrichtungen die für das Ausrücken der Kupplung 12 über das Kupplungspedal 18 aufzubringende Geberkraft $F_G$ mit zunehmendem Verschleiß der Kupplung 12 in Abhängigkeit von deren Bauart. Auch insofern ändert sich das Pedalgefühl gegenüber herkömmlichen hydraulischen Betätigungsvorrichtungen also nicht.

Während bei dem ersten Ausführungsbeispiel eine hydraulische Parallelschaltung vom Geberkolben 16 und Stellkolben 28 vorliegt, sind bei dem zweiten Ausführungsbeispiel der Geberkolben 16 und der Stellkolben 28 hydraulisch in Reihe geschaltet. So ist bei dem zweiten Ausführungsbeispiel, das nachfolgend nur insoweit beschrieben werden sollen, als es sich von dem ersten Ausführungsbeispiel unterscheidet, der Stellkolben 28 zwischen dem Geberkolben 16 und dem Nehmerkolben 22 angeordnet, wobei der Stellkolben 28 die Flüssigkeitssäule zwischen dem Geberkolben

16 und dem Nehmerkolben 22 in einen Geberabschnitt zwischen Geberkolben 16 und Stellkolben 28 und einen Nehmerabschnitt zwischen Stellkolben 28 und Nehmerkolben 22 unterteilt. Hierbei kann durch Kraftbeaufschlagung des Stellkolbens 28 über das mittels des Elektromotors M antreibbare Getriebe 30 die auf den Nehmerabschnitt der Flüssigkeitssäule wirkende Kraft definiert angehoben werden.

Wie die Fig. 5 zeigt, unterscheiden sich beim zweiten Ausführungsbeispiel weder der Geberzylinder 14 oder der Nehmerzylinder 20 noch die Kupplung 12 von den entsprechenden Baugruppen bei dem unter Bezugnahme auf die Fig. 1 beschriebenen ersten Ausführungsbeispiel. Bei der Stelleinheit 26 bestehen jedoch einige Unterschiede. Zunächst begrenzt der Stellkolben 28 im Zylindergehäuse 74 auf seiner in Fig. 5 rechten Seite druckdicht und variabel einen zweiten Druckraum 98, in den sich die Kugelrollspindel 80 geeignet abgedichtet hineinerstreckt. Ferner ist der Stellkolben 28 mittels der Vorspannfeder 78 in eine Grundstellung vorgespannt, in der der erste Druckraum 76 der Stelleinheit 26 mit dem Vorratsbehälter 40 über eine weitere Nachlaufleitung 38 hydraulisch verbunden ist (in Fig. 5 zur Vereinfachung der Darstellung durch ein "X" angedeutet). Im Ergebnis werden die beiden durch den Stellkolben 28 getrennten Hydraulikkreise - der Geberabschnitt bzw. der Nehmerabschnitt der Flüssigkeitssäule zwischen Geberkolben 16 und Nehmerkolben 22 - separat entlüftet und Volumenänderungen in diesen Hydraulikkreisen separat kompensiert.

Des weiteren ist der Druckraum 34 des Geberzylinders 14 über eine Druckleitung 100 an den zweiten Druckraum 98 der Stelleinheit 26 angeschlossen, während deren erster Druckraum 76 über eine weitere Druckleitung 102 an den Druckraum 50 des Nehmerzylinders 20 angeschlossen ist. Es ist ersichtlich, daß bei einer Kupplungsbetätigung der Geberabschnitt der Flüssigkeitssäule in der Druckleitung 100 verschoben wird, während der Nehmerabschnitt der Flüssigkeitssäule in der weiteren Druckleitung 102 verschoben wird.

Auch bei der Betätigungsvorrichtung 10 gemäß Fig. 5 sind zwei Sensoreinrichtungen 104 und 108 vorgesehen, von denen die erste Sensoreinrichtung 104 dazu dient, eine für den jeweiligen Betätigungszustand des Geberzylinders 14 repräsentative Größe zu erfassen, während die zweite Sensoreinrichtung 108 dazu dient, eine von der mittels der ersten Sensoreinrichtung 104 erfaßten Größe verschiedene Größe zu erfassen, wie noch näher erläutert werden wird. Die erste Sensoreinrichtung 104 ist wiederum über eine Signalleitung 92 an die Steuereinheit C angeschlossen, während die zweite Sensoreinrichtung 108 über eine weitere Signalleitung 96 mit der Steuereinheit C verbunden ist.

Genauer gesagt ist bei dem zweiten Ausführungsbeispiel gemäß Fig. 5 mittels der zweiten Sensoreinrichtung 108 der Nehmerdruck $p_{Nist}$ im Nehmerabschnitt der Flüssigkeitssäule, der im Druckraum 50 des Nehmerzylinders 20, in der Druckleitung 102 und im ersten Druckraum 76 der Stelleinheit 26 vorherrscht, als Führungsgröße für die Regelung des Elektromotors M über die Steuereinheit C erfaßbar. Mittels der ersten Sensoreinrichtung 104 hingegen ist der Geberdruck $p_{Gist}$ im Geberabschnitt der Flüssigkeitssäule, der im Druckraum 34 des Geberzylinders 14, in der Druckleitung 100 und im zweiten Druckraum 98 der Stelleinheit 26 ansteht, als Regelgröße erfaßbar. Vorzugsweise sind die erste Sensoreinrichtung 104 und die zweite Sensoreinrichtung 108 gemeinsam an der Stelleinheit 26 vorgesehen, so daß diese als "add on"-Baugruppe bereits die für die Regelung erforderliche Sensorik trägt. Den jeweiligen Einbauerfordernissen entsprechend ist es jedoch als Alternative auch denkbar, daß entsprechende Drucksensoren 104, 108 am Geberzylinder 14 bzw. am Nehmerzylinder 20 (oder in den Druckleitungen 100 bzw. 102) angeordnet werden, wie in Fig. 5 mit gestrichelten Linien am Geberzylinder 14 bzw. am Nehmerzylinder 20 angedeutet ist. Ebenfalls kann als Alternative zur Druckerfassung im Geberabschnitt der Flüssigkeitssäule daran gedacht werden, als Regelgröße die Geberkraft $F_{Gist}$ etwa mittels eines an der Kolbenstange 42 vorgesehenen Kraftsensors 104' zu erfassen, was ebenfalls in Fig. 5 mit gestrichelten Linien gezeigt ist.

Wie nachfolgend anhand der Fig. 6 noch näher erläutert werden soll, ist in der Steuereinheit C in Abhängigkeit von dem erfaßten Nehmerdruck $p_{Nist}$ ein Soll-Wert für den Geberdruck $p_{Gsoll}$ (oder die Geberkraft $F_{Gsoll}$) ermittelbar, worauf der ermittelte Geberdruck $p_{Gsoll}$ (oder die ermittelte Geberkraft $F_{Gsoll}$) über den von der Steuereinheit C angesteuerten Elektromotor M der Stelleinheit 26 einregelbar ist.

Zu diesem Zweck weist die Steuereinheit C wiederum ein Rechenglied R auf, mittels dessen der Soll-Wert für den Geberdruck $p_{Gsoll}$ (bzw. die Geberkraft $F_{Gsoll}$) nach folgender Beziehung ermittelbar ist:

$$p_{Gsoll} = 1/k_V * p_{Nist} \quad \text{bzw.} \quad F_{Gsoll} = A_G/k_V * p_{Nist}$$

mit

$p_{Nist}$: dem vermittels der zweiten Sensoreinrichtung 108 erfaßten Nehmerdruck im Nehmerabschnitt der Flüssigkeitssäule,

$k_v$: einem in einem Speicherglied S der Steuereinheit C abgelegten Verstärkungsfaktor und

$A_G$: der hydraulischen Wirkfläche des Geberkolbens 16.

Wenn bei dem zweiten Ausführungsbeispiel das Kupplungspedal 18 von der Bedienperson niedergetreten wird, um die Kupplung 12 auszurücken, schiebt der Geberkolben 16 den Geberabschnitt der Flüssigkeitssäule zwischen Geberkolben 16 und Stellkolben 28, den Stellkolben 28, den Nehmerabschnitt der Flüssigkeitssäule zwischen Stellkolben 28 und Nehmerkolben 22 sowie den Nehmerkolben 22 vor sich her. Dabei überfährt der Geberkolben 16 die im Zylindergehäuse 32 ausgebildete Verbindungsbohrung zu der an den Vorratsbehälter 40 angeschlossenen Nachlaufleitung 38, während der Stellkolben 28 die im Zylindergehäuse 74 vorgesehene Verbindungsbohrung zu der Nachlaufleitung 38 überfährt. In der Folge baut sich aufgrund der von der Bedienperson aufgebrachten Geberkraft $F_G$ und der Widerstandskraft der Kupplung 12, nämlich der Nehmerkraft $F_N$ sowohl ein Geberdruck $p_{Gist}$ im Geberabschnitt der Flüssigkeitssäule als auch ein Nehmerdruck $p_{Nist}$ im Nehmerabschnitt der Flüssigkeitssäule auf. Während der Geberdruck $p_{Gist}$ von der ersten Sensoreinrichtung 104 erfaßt wird, wird der Nehmerdruck $p_{Nist}$ von der zweiten Sensoreinrichtung 108 erfaßt. Aus dem erfaßten Nehmerdruck $p_{Nist}$ wird in der Steuereinheit C sodann mittels deren Rechenglied R gemäß der obigen Beziehung ein Soll-Wert für den Geberdruck $p_{Gsoll}$ ermittelt. In der Folge steuert die Steuereinheit C den Elektromotor M der Stelleinheit 26 an, bis der mittels der ersten Sensoreinrichtung 104 erfaßte Ist-Wert für den Geberdruck $p_{Gist}$ mit dem jeweils vorgegebenen Soll-Wert für den Geberdruck $p_{Gsoll}$ übereinstimmt. Mit anderen Worten gesagt entlastet die Stelleinheit 26 den Geberabschnitt der Flüssigkeitssäule in vorbestimmter Weise, so daß am Kupplungspedal 18 lediglich eine Reaktionskraft von mäßiger Höhe spürbar ist, obgleich eine Kupplung 12 mit einer großen Widerstandskraft, d.h. Nehmerkraft $F_N$ ausgerückt wird.

Für einen vorgegebenen Geberweg $S_{Gistn}$ ordnet die Steuereinheit C, genauer deren Rechenglied R also jedem Nehmerdruck $p_{Nistn}$ einen Soll-Wert für den Geberdruck $p_{Gsolln}$ zu, den es durch geeignete Ansteuerung des Elektromotors M durch die Steuereinheit C wie beschrieben einzuregeln gilt. Im Ergebnis wird bei einer Kupplungsbetätigung die Kupplungskennlinie sozusagen "gestaucht" an das Kupplungspedal 18 zurückgemeldet, wie es die Fig. 6 veranschaulicht. Bildet man bei einem vorgegebenen Geberweg $S_G$ ein Kräftegleichgewicht am Stellkolben 28, ergibt sich folgende Beziehung:

$$F_{PN} = F_S + F_{PG}$$

wobei

$$F_{PN} = p_N \star A_S \text{ und } F_{PG} = p_G \star A_S = F_G/A_G \star A_S$$

mit

$A_S$:  der hydraulischen Wirkfläche des Stellkolbens 28 (unter der vereinfachenden Annahme, daß diese zu beiden Seiten des Stellkolbens 28 gleich ist).

Demgemäß setzt sich in jedem Punkt der Kupplungskennlinie der für den jeweiligen Aus- bzw. Einrückzustand der Kupplung 12 im Nehmerzylinder 20 aufzubringende Nehmerdruck $p_N$ aus einem Geberkraftanteil $F_G/A_G$ und einem Stellkraftanteil $F_S/A_S$ zusammen. Dies ist ebenfalls in Fig. 6 dargestellt. Hieraus ergibt sich auch, daß, wenn die Stelleinheit 26 z.B. durch ein Versagen des Elektromotors M ausfallen sollte ($F_s = 0$), der Nehmerdruck $p_N$ alleine über die Geberkraft $F_G$, d.h. von der Bedienperson aufzubringen ist. Die Auslegung der hydraulischen Übersetzung der Betätigungsvorrichtung 10, d.h. die Dimensionierung der hydraulischen Wirkflächen an Geberkolben 16, Stellkolben 28 und Nehmerkolben 22 sollte deshalb zweckmäßig dergestalt erfolgen, daß ein Ausrücken der Kupplung 12 im Versagensfalle der Stelleinheit 26 mit zumutbaren Kräften noch möglich ist.

Es wurde bereits erwähnt, daß bei einem Verschleiß der Kupplung 12 die Nehmerkraft $F_N$ bedingt durch die Bauart der Kupplung 12 ansteigt. Demgemäß muß mittels der Betätigungsvorrichtung 10 ein höherer Nehmerdruck $p_N$ aufgebracht werden, um die Kupplung 12 auszurücken. In der Fig. 6 ist oberhalb der Kennlinie $p_{Nist}$ mit einer gestrichelten Linie eine weitere Kennlinie $p_{NistV}$ für eine verschlissene Kupplung 12 aufgetragen. Wenn in der Steuereinheit C, genauer deren Rechenglied R stets mit ein und demselben Verstärkungsfaktor $k_v$ gerechnet werden würde, ergäbe sich infolge des Kupplungsverschleißes auch ein erhöhter Soll-Wert für den Geberdruck $p_{Gsoll}$ (siehe die in Fig. 6 oberhalb des Geberdruckverlaufs $p_{Gsoll}$ mit gestrichelten Linien eingezeichnete Kurve $p_{GV}$). Bei Einregelung eines solchen erhöhten SollWerts für den Geberdruck $p_{Gsoll}$ würde die Bedienperson in Abhängigkeit vom Verschleiß der Kupplung 12 eine dementsprechend erhöhte Reaktionskraft am Kupplungspedal 18 verspüren. Um dies zu vermeiden, weist die Steuereinheit C ferner ein Korrekturglied K auf, mittels dessen der Verstärkungsfaktor $k_v$ in Abhängigkeit vom Verschleiß der Kupplung 12 vorzugsweise nach folgender Beziehung korrigierbar ist:

$$k_V = k_{V0} * (p_{Nmax0} + \Delta p_{Nmax}) / p_{Nmax0}$$

wobei

$$\Delta p_{Nmax} = p_{Nmaxist} - p_{Nmax0}$$

mit

$k_{v0}$: einem in dem Speicherglied S der Steuereinheit C abgelegten, festen Verstärkungsfaktor für eine unverschlissene Kupplung 12,

$P_{Nmax0}$: einem in dem Speicherglied S der Steuereinheit C abgelegten Festwert für einen maximalen Nehmerdruck im Nehmerabschnitt der Flüssigkeitssäule bei unverschlissener Kupplung 12 und

$P_{Nmaxist}$: dem vermittels der zweiten Sensoreinrichtung 108 bei einer Kupplungsbetätigung erfaßten maximalen Nehmerdruck im Nehmerabschnitt der Flüssigkeitssäule, den sich die Steuereinheit C durch Ablegen im Speicherglied S "merkt".

Demgemäß findet mit zunehmendem Verschleiß der Kupplung 12 also eine damit einhergehende Erhöhung des Verstärkungsfaktors $k_v$ statt, die dazu führt, daß die Bedienperson unabhängig vom Verschleiß der Kupplung 12 beim Aus- bzw. Einrücken der Kupplung 12 am Kupplungspedal 18 stets den gleichen Reaktionskraftverlauf verspürt. Mit anderen Worten gesagt wird die verschleißbedingte Zunahme der Nehmerkraft $F_N$ durch geänderte Ansteuerung der Stelleinheit 26 kompensiert. In diesem Zusammenhang kann im Hinblick auf ein optimiertes Regelverhalten auch daran gedacht werden, eine Anpassung des Verstärkungsfaktors $k_v$ erst dann vorzunehmen, wenn der erfaßte maximale Nehmerdruck $p_{Nmaxist}$ im Nehmerabschnitt der Flüssigkeitssäule (ggf. wiederholt) um einen vorbestimmten Betrag von dem in dem Speicherglied S der Steuereinheit C abgelegten Festwert $p_{Nmx0}$ für den Nehmerdruck abweicht. Als Alternative zur beschriebenen Vorgehensweise können zur Anpassung des Verstärkungsfaktors $k_v$ im übrigen natürlich auch die Druckverhältnisse im Geberabschnitt der Flüssigkeitssäule herangezogen werden, die mittels der ersten Sensoreinrichtung 104 erfaßt werden (in der obigen Beziehung wären dann lediglich die Indizes N für Nehmerzylinder durch G für Geberzylinder zu ersetzen).

Schließlich kann beim zweiten Ausführungsbeispiel die Steuereinheit C auch so ausgebildet sein, daß in deren Speicherglied S verschiedene Verstärkungsfaktoren $k_v$ abgelegt sind, von denen die Bedienperson jeweils einen anwählen bzw. voreinstellen kann, z.B. mittels eines Vorwählschalters (nicht gezeigt), um das Betätigungsgefühl der Betätigungsvorrichtung 10 individuell den Bedürfnissen der Bedienperson anzupassen.

Für den Fachmann ist ersichtlich, daß grundsätzlich auch andere Sensoren als bisher beschrieben und in den Figuren gezeigt eingesetzt werden können. So können z.B. anstelle der Hubwege $S_G$, $S_N$ bzw. $S_S$ der Kolben, d.h. der erwähnten Weggrößen auch dazu proportionale Größen erfaßt und geeignet ausgewertet werden, etwa (1) mittels eines Winkelwertgebers am Kupplungspedal 18 zur Erfassung der Winkelstellung des Kupplungspedals 18 bezüglich des Pedalbocks 44, die wiederum repräsentativ für den Geberweg $S_G$ ist, (2) mittels eines Winkelwertgebers am Ausrückhebel 24 zur Erfassung der Winkelstellung des Ausrückhebels 24 bezüglich des Umlenkbocks 54, die repräsentativ für den Nehmerweg $S_N$ ist, und/oder (3) mittels eines Drehstellungsgebers an der Spindelmutter 82 des Getriebes 30, aus dessen Signalen bei bekannter Steigung der Kugelrollspindel 80 auf den Stellweg $S_s$ des Stellkolbens 28 zurückge- schlossen werden kann.

Es wird eine hydraulische Betätigungsvorrichtung für eine Kraftfahrzeug-Reibkupplung offenbart, mit einem Geberzylinder, dessen Geberkolben über ein Betätigungsorgan mit einer Geberkraft beaufschlagbar und um einen Geberweg verschiebbar ist, und einem Nehmerzylinder, der einen mit dem Geberkolben über eine Flüssigkeitssäule hydraulisch in Reihe geschalteten, mit einem Ausrückorgan der Kraftfahrzeug-Reibkupplung wirkverbundenen Nehmerkolben aufweist. Ferner ist eine Stelleinheit vorgesehen, die einen mit dem Geberkolben hydraulisch in Reihe geschalteten Stellkolben hat, welcher über ein elektromotorisch antreibbares Getriebe kraftbeaufschlagbar und verschiebbar ist, sowie eine Steuereinheit, mittels der die Stelleinheit in Abhängigkeit von insbesondere einer Gebergröße ansteuerbar ist, um durch Kraftbeaufschlagung des Stellkolbens die auf die Flüssigkeitssäule wirkende Kraft zu erhöhen. Im Ergebnis wird eine einfache, kompakte Betätigungsvorrichtung geschaffen, mittels der auch kräftig dimensionierte Kupplungen betätigbar sind, ohne daß dies ein verglichen mit herkömmlichen Betätigungsvorrichtungen anderes Pedalgefühl bedingt.

BEZUGSZEICHENLISTE

| 10 | Betätigungsvorrichtung |
|---|---|
| 12 | Kupplung |
| 14 | Geberzylinder |
| 16 | Geberkolben |
| 18 | Kupplungspedal |
| 20 | Nehmerzylinder |
| 22 | Nehmerkolben |
| 24 | Ausrückhebel |
| 26 | Stelleinheit |
| 28 | Stellkolben |
| 30 | Getriebe |
| 32 | Zylindergehäuse |
| 34 | Druckraum |
| 36 | Rückstellfeder |
| 38 | Nachlaufleitung |
| 40 | Vorratsbehälter |
| 42 | Kolbenstange |
| 44 | Pedalbock |
| 46 | Druckplatte |
| 48 | Zylindergehäuse |
| 50 | Druckraum |
| 52 | Druckstange |
| 54 | Umlenkbock |
| 56 | Ausrücklager |
| 58 | Ausrückmechanismus |
| 60 | Druckplatte |
| 62 | Schwungrad |
| 64 | Kurbelwelle |
| 66 | Anpreßfeder |
| 68 | Getriebeeingangswelle |
| 70 | Kupplungsscheibe |
| 72 | Vorlastfeder |
| 74 | Zylindergehäuse |
| 76 | Druckraum |
| 78 | Vorspannfeder |
| 80 | Kugelrollspindel |
| 82 | Spindelmutter |
| 84 | Stromleitung |
| 86 | Druckleitung |
| 88 | Druckleitung |
| 90 | erste Sensoreinrichtung |
| 92 | Signalleitung |
| 94 | zweite Sensoreinrichtung |
| 96 | Signalleitung |
| 98 | Druckraum |
| 100 | Druckleitung |
| 102 | Druckleitung |
| 104, 104' | erste Sensoreinrichtung |
| 108 | zweite Sensoreinrichtung |

| C | Steuereinheit |
|---|---|
| K | Korrekturglied |
| M | Elektromotor |
| R | Rechenglied |
| S | Speicherglied |

| $A_G$ | hydraulische Wirkfläche des Geberkolbens |
|---|---|
| AN | hydraulische Wirkfläche des Nehmerkolbens |

$A_s$      hydraulische Wirkfläche des Stellkolbens
AK      Auskuppelpunkt
$AT_G$      Anteil des durch den Geberzylinder beigesteuerten Volumens
$AT_S$      Anteil des durch die Stelleinheit beigesteuerten Volumens
$F_G$      Geberkraft
$F_N$      Nehmerkraft
$F_S$      Stellkraft
$k_U$      Übersetzungsfaktor

$k_v$      Verstärkungsfaktor
$p_G$      Geberdruck
$p_N$      Nehmerdruck
$S_G$      Geberweg
$S_N$      Nehmerweg
$S_s$      Stellweg
$\Delta V_N$      Volumenaufnahme des Nehmerzylinders

**Patentansprüche**

1. Hydraulische Betätigungsvorrichtung (10) für eine Kraftfahrzeug-Reibkupplung (12), mit
einem Geberzylinder (14), dessen Geberkolben (16) über ein Betätigungsorgan (18) als Gebergrößen mit einer Geberkraft ($F_G$) beaufschlagbar und um einen Geberweg ($S_G$) verschiebbar ist,
einem Nehmerzylinder (20), der einen mit dem Geberkolben (16) hydraulisch in Reihe geschalteten Nehmerkolben (22) aufweist, welcher mit einem Ausrückorgan (24) der Kraftfahrzeug-Reibkupplung (12) wirkverbunden ist,
einer Stelleinheit (26), die einen Stellkolben (28) hat, der über ein mittels eines Elektromotors (M) antreibbares Getriebe (30) kraftbeaufschlagbar und verschiebbar ist, zur hydraulischen Reihenschaltung von Geberkolben (16) und Stellkolben (28) zwischen dem Geberkolben (16) und dem Nehmerkolben (22) angeordnet ist und eine Flüssigkeitssäule zwischen dem Geberkolben (16) und dem Nehmerkolben (22) in einen Geberabschnitt zwischen Geberkolben (16) und Stellkolben (28) und einen Nehmerabschnitt zwischen Stellkolben (28) und Nehmerkolben (22) unterteilt,
einer Steuereinheit (C), mittels der der Elektromotor (M) ansteuerbar ist, so daß durch Kraftbeaufschlagung des Stellkolbens (28) über das Getriebe (30) die auf den Nehmerabschnitt der Flüssigkeitssäule wirkende Kraft definiert anhebbar ist,
einer mit der Steuereinheit (C) signalverbundenen ersten Sensoreinrichtung (104; 104'), mittels der ein Geberdruck ($p_{Gist}$) im Geberabschnitt der Flüssigkeitssäule oder die Geberkraft ($F_{Gist}$) als Regelgröße erfaßbar ist, und
einer mit der Steuereinheit (C) signalverbundenen zweiten Sensoreinrichtung (108), mittels der ein Nehmerdruck ($p_{Nist}$) im Nehmerabschnitt der Flüssigkeitssäule als Führungsgröße erfaßbar ist,
wobei die Steuereinheit (C) ein Rechenglied (R) aufweist, mittels dessen ein Soll-Wert für den Geberdruck ($p_{Gsoll}$) bzw.
die Geberkraft ($F_{Gsoll}$) nach folgender Beziehung ermittelbar ist:

$$p_{Gsoll} = 1/k_v * p_{Nist} \text{ bzw. } F_{Gsoll} = A_G/k_v * p_{Nist}$$

mit

$P_{Nist}$: dem vermittels der zweiten Sensoreinrichtung (108) erfaßten Nehmerdruck im Nehmerabschnitt der Flüssigkeitssäule,
$k_v$: einem in einem Speicherglied (S) der Steuerein- heit (C) abgelegten Verstärkungsfaktor und
$A_G$: der hydraulischen Wirkfläche des Geberkolbens (16),

wobei die Steuereinheit (C) ferner ein Korrekturglied (K) aufweist, mittels dessen der Verstärkungsfaktor ($k_v$) mit zunehmendem Kupplungsverschleiß definiert vergrößerbar ist, so daß eine Bedienperson beim Aus- bzw. Einrücken der Kupplung (12) unabhängig vom Kupplungsverschleiß am Betätigungsorgan (18) stets den gleichen Reaktionskraftverlauf verspürt, und
wobei der ermittelte Geberdruck ($p_{Gsoll}$) oder die ermittelte Geberkraft ($F_{Gsoll}$) über den von der Steuereinheit (C)

angesteuerten Elektromotor (M) der Stelleinheit (26) einregelbar ist.

2. Betätigungsvorrichtung (10) nach Anspruch 1, wobei der Verstärkungsfaktor ($k_v$) mittels des Korrekturglieds (K) der Steuereinheit (C) in Abhängigkeit vom Kupplungsverschleiß nach folgender Beziehung korrigierbar ist:

$$k_V = k_{V0} * (p_{Nmax0} + \Delta p_{Nmax}) / p_{Nmax0}$$

wobei

$$\Delta p_{Nmax} = p_{Nmaxist} - p_{Nmax0}$$

mit

$k_{v0}$: einem in dem Speicherglied (S) der Steuerein- heit (C) abgelegten, festen Verstärkungsfaktor für eine unverschlissene Kupplung (12),

$p_{Nmax0}$: einem in dem Speicherglied (S) der Steuerein- heit (C) abgelegten Festwert für einen maxi- malen Nehmerdruck im Nehmerabschnitt der Flüs- sigkeitssäule bei unverschlissener Kupplung (12) und

$p_{Mmaxist}$: dem vermittels der zweiten Sensoreinrichtung (108) erfaßten maximalen Nehmerdruck im Nehmer- abschnitt der Flüssigkeitssäule.

3. Betätigungsvorrichtung (10) nach Anspruch 1 oder 2, wobei der Geberkolben (16) mittels einer Rückstellfeder (36) in eine Grundstellung vorgespannt ist, in der der Druckraum (34) des Geberzylinders (14) mit einem Vorratsbehälter (40) hydraulisch verbunden ist.

4. Betätigungsvorrichtung (10) nach Anspruch 3, wobei auch der Stellkolben (28) mittels einer Vorspannfeder (78) in eine Grundstellung vorgespannt ist, in der ein Druckraum (76) der Stelleinheit (26) mit einem Vorratsbehälter (40) hydraulisch verbunden ist.

5. Betätigungsvorrichtung (10) nach einem der vorhergehenden Ansprüche, wobei es sich bei dem Getriebe (30) der Stelleinheit (26) um einen Spindeltrieb handelt.

6. Betätigungsvorrichtung (10) nach einem der vorhergehenden Ansprüche, wobei es sich bei dem Elektromotor (M) der Stelleinheit (26) um einen bürstenlosen Gleichstrommotor handelt.

**Claims**

1. Hydraulic actuating device (10) for an automotive friction clutch (12), with
a master cylinder (14), the master piston (16) of which can be impinged upon with a master force ($F_G$) and can be displaced by a master travel ($s_G$) as master variables via an actuating member (18),
a slave cylinder (20) comprising a slave piston (22) which is hydraulically connected in series to the master piston (16), and which is functionally linked with a clutch-release member (24) of the automotive friction clutch (12),
an adjusting unit (26) comprising an adjusting piston (28) which can be impinged upon with a force and displaced via a transmission (30) that can be driven by an electric motor (M), which, for a connection in series of the master piston (16) and the adjusting piston (28), is arranged between the master piston (16) and the slave piston (22), and which divides a liquid column between the master piston (16) and the slave piston (22) into a master section between the master piston (16) and the adjusting piston (28) and a slave section between the adjusting piston (28) and the slave piston (22),
a control unit (C), by means of which the electric motor (M) can be controlled, so that by impinging a force upon the adjusting piston (28) via the transmission (30) the force acting on the slave section of the liquid column can be increased in a defined manner,
a first sensor device (104; 104') with a signal connection to the control unit (C), by means of which a master pressure ($p_{Gist}$) in the master section of the liquid column or the master force ($F_{Gist}$) can be detected as a control variable, and

a second sensor device (108) with a signal connection to the control unit (C), by means of which a slave pressure ($p_{Nist}$) in the slave section of the liquid column can be detected as a reference value,

wherein the control unit (C) comprises a computation element (R) by means of which a desired value for the master pressure ($p_{Gsoll}$) or the master force ($F_{Gsoll}$) can be determined according to the following relationship:

$$p_{Gsoll} = 1/k_V * p_{Nist} \quad or \quad F_{Gsoll} = A_G/k_V * p_{Nist}$$

where

$p_{Nist}$: is the slave pressure in the slave section of the liquid column detected by the second sensor device (108),

$k_v$: is an amplification factor stored in a storage element (S) of the control unit (C) and

$A_G$: is the hydraulic effective area of the master piston (16),

wherein the control unit (C) further has a correction element (K) by means of which, with an increasing wear of the clutch, the amplification factor ($k_v$) can be increased in a defined manner, so that an operator, upon engaging or disengaging the clutch (12), always perceives the same reaction force response on the actuating member (18), independent of the clutch wear, and

wherein the master pressure ($p_{Gsoll}$) determined or the master force ($F_{GSoll}$) determined can be adjusted via the electric motor (M) of the adjusting unit (26) which is controlled by the control unit (C).

2. Actuating device (10) according to claim 1, wherein, by means of the correction element (K) of the control unit (C), the amplification factor ($k_v$) can be corrected in accordance with the following relation subject to the clutch wear:

$$k_V = k_{V0} * (p_{Nmax0} + \Delta p_{Nmax}) / p_{Nmax0}$$

wherein

$$\Delta p_{Nmax} = p_{Nmaxist} - p_{Nmax0}$$

where

$k_{v0}$ is a fixed amplification factor stored in the storage element (S) of the control unit (C) for an non-worn clutch (12),

$p_{Nmax0}$ is a fixed value stored in the storage element (S) of the control unit (C) for a maximum slave pressure in the slave section of the liquid column with a non-worn clutch (12) and

$p_{Nmaxist}$ is the maximum slave pressure detected in the slave section of the liquid column by the second sensor device (108).

3. Actuating device (10) according to claim 1 oder 2, wherein the master piston (16) is pretensioned in a basic position by a return spring (36), in which position the pressure chamber (34) of the master cylinder (14) is hydraulically connected to a reservoir (40).

4. Actuating device (10) according to claim 3, wherein the adjusting piston (28) is also pretensioned in a basic position by a pretensioning spring (78), in which position a pressure chamber (76) of the adjusting unit (26) is hydraulically connected to a reservoir (40).

5. Actuating device (10) according to any one of the preceding claims, wherein the transmission (30) of the adjusting unit (26) is a spindle drive.

6. Actuating device (10) according to any one of the preceding claims, wherein the electric motor (M) of the adjusting unit (26) is a brushless DC motor.

**Revendications**

1. Dispositif d'actionnement hydraulique (10) pour un embrayage à friction (12) de véhicule automobile, comportant un cylindre émetteur (14) dont le piston émetteur (16) peut être sollicité via un organe d'actionnement (18) à titre de grandeur d'émission avec une force d'émission ($F_G$) et déplacé d'une course d'émission ($S_G$), un cylindre récepteur (20) qui présente un piston récepteur (22) branché hydrauliquement en série avec le piston émetteur (16), qui est activement relié à un organe de débrayage (24) de l'embrayage à friction (12) de véhicule automobile, une unité de positionnement (26) qui possède un piston de positionnement (28) qui peut être sollicité en force et déplacé via un mécanisme (30) susceptible d'être entraîné par un moteur électrique (M), qui est agencée entre le piston émetteur (16) et le piston récepteur (22) pour brancher en série hydraulique le piston émetteur (16) et le piston de positionnement (28) et qui divise une colonne de liquide entre le piston émetteur (16) et le piston récepteur (22) en un tronçon émetteur entre le piston émetteur (16) et le piston de positionnement (28) et un tronçon récepteur entre le piston de positionnement (28) et le piston récepteur (22), une unité de commande (C) au moyen de laquelle le moteur électrique (M) peut être piloté de telle sorte que par sollicitation en force du piston de positionnement (28) via le mécanisme (30), la force agissant sur le tronçon récepteur de la colonne de liquide peut être augmentée de manière définie, un premier dispositif capteur (104 ; 104') relié par signal à l'unité de commande (C), au moyen duquel une pression d'émission ($p_{Gist}$) dans le tronçon émetteur de la colonne de liquide ou la force d'émission ($F_{Gist}$) peut être détectée à titre de grandeur de régulation, et un deuxième dispositif capteur (108) relié par signal à l'unité de commande (C), au moyen duquel une pression de réception ($p_{Nist}$) dans le tronçon récepteur de la colonne de liquide peut être détectée à titre de grandeur pilote, étant entendu que l'unité de commande (C) comprend un circuit de calcul (R) au moyen duquel il est possible de déterminer une valeur de consigne pour la pression d'émission ($p_{Gsoll}$) ou la force d'émission ($F_{Gsoll}$) d'après l'équation suivante :

$$p_{Gsoll} = 1/k_v * p_{Nist} \quad \text{ou} \quad F_{Gsoll} = A_G/k_v * p_{Nist}$$

dans laquelle
$p_{Nist}$ est la pression de réception, détectée au moyen du deuxième dispositif capteur (108) dans le tronçon récepteur de la colonne de liquide,
$k_v$ est un facteur d'amplification mémorisé dans un élément de mémoire (S) de l'unité de commande (C), et
$A_G$ est la surface hydraulique efficace du piston émetteur (16),
dans lequel l'unité de commande (C) comprend en outre un circuit correcteur (K) au moyen duquel le facteur d'amplification ($k_v$) peut être augmenté de manière définie alors que l'usure de l'embrayage augmente, de sorte qu'un opérateur ressent au niveau de l'organe d'actionnement (18) toujours la même allure de force de réaction lors de l'embrayage et du débrayage de l'embrayage (12) indépendamment de l'usure de l'embrayage, et dans lequel la pression d'émission ($P_{Gsoll}$) déterminée ou la force d'émission ($F_{Gsoll}$) déterminée est réglable au moyen du moteur électrique (M) de l'unité de positionnement (26), piloté par l'unité de commande (C).

2. Dispositif d'actionnement (10) selon la revendication 1, dans lequel le facteur amplification (kv) peut être corrigé au moyen du circuit de correction (K) de l'unité de commande (C) en fonction de l'usure de l'embrayage d'après l'équation suivante :

$$K_v = k_{v0} * (p_{Nmax0} + \Delta p_{Nmax}) / p_{Nmax0}$$

dans laquelle

$$\Delta p_{Nmax} = p_{Nmaxist} - p_{Nmax0}$$

et
$k_{v0}$ est un facteur d'amplification fixe, mémorisé dans l'élément de mémoire (S) de l'unité de commande (C) pour un embrayage sans usure (12),

$p_{Nmax0}$ est une valeur fixe, mémorisée dans l'élément de mémoire (S) de l'unité de commande (C) pour une pression d'émission maximum dans le tronçon émetteur de la colonne de liquide pour un embrayage sans usure (12), et

$p_{Nmaxist}$ est la pression d'émission maximum, détectée au moyen du deuxième dispositif capteur (108), dans le tronçon récepteur de la colonne de liquide.

3. Dispositif d'actionnement (10) selon la revendication 1 ou 2, dans lequel le piston émetteur (16) est précontraint au moyen d'un ressort de rappel (36) vers une position de base dans laquelle la chambre à pression (34) du cylindre émetteur (14) est reliée hydrauliquement à un réservoir (40).

4. Dispositif d'actionnement (10) selon la revendication 3, dans lequel le piston de positionnement (28) est aussi précontraint au moyen d'un ressort de précontrainte (78) jusque dans une position de base dans laquelle une chambre sous pression (76) de l'unité de positionnement (26) est reliée hydrauliquement à un réservoir (40).

5. Dispositif d'actionnement (10) selon l'une des revendications précédentes, dans lequel le mécanisme (30) de l'unité de positionnement (26) est un entraînement à broche.

6. Dispositif d'actionnement (10) selon l'une des revendications précédentes, dans lequel le moteur électrique (M) de l'unité de positionnement (26) est un moteur à courant continu sans balais.

FIG.1

FIG. 2

FIG. 3

FIG. 4

FIG.5

EP 1 927 776 B1

FIG. 6

EP 1 927 776 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4918921 A
- US 5002166 A
- US 5094079 A

- DE 10222730 A1
- DE 20315735 U1

**In der Beschreibung aufgeführte Nicht-Patentliteratur**

- Handbuch der hydraulischen Bremsanlage und Kupplungsbetätigung. 1998, 261